# EUROPEAN PATENT SPECIFICATION

(11) **EP 3 556 269 B1**
(45) Date of publication and mention of the grant of the patent: **18.08.2021**
(21) Application number: 18168297.2
(22) Date of filing: 19.04.2018
(51) Int. Cl.: A47J 31/46

(54) **CERAMIC DISC VALVE FOR HOT BEVERAGE PREPARING APPARATUS**
KERAMIKSCHEIBENVENTIL FÜR HEISSGETRÄNKEZUBEREITUNGSVORRICHTUNG
SOUPAPE À DISQUE CÉRAMIQUE POUR APPAREIL DE PRÉPARATION DE BOISSONS CHAUDES

(43) Date of publication of application: 23.10.2019
(73) Proprietor: BSH Hausgeräte GmbH, 81739 München (DE)
(72) Inventor: Berginc, Miha, 3000 Celje (SI); Melik, Janez, 3000 Celje (SI)

(56) References cited:
- DE-B3-102006 049 894
- GB-A- 2 234 327
- US-A- 4 947 738

## Description

The invention relates to a ceramic disc valve for hot beverage preparing apparatus, particularly a coffee machine, also include a coffee machine what are known as fully automatic coffee machine, comprising a water container, a heater, and a multiple-way valve disposed downstream of the heater and operable to supply hot water or hot steam produced by said heater to individual preparation devices such as a coffee brewing unit, a foaming nozzle, or release of hot steam, or the like.

The multi-way valves employed in said devices are usually 3-way or more-way valves, therefore they are convenient for either supplying the hot water to a brewing coffee unit of the apparatus or for supplying hot steam to the foaming nozzle for heating and frothing/foaming milk for drinks as a cappuccino also as the subsequent preparation of cappuccino. In the next working position multi-way valve can open a channel leading usually to a drip tray or the like to thereby permit the steam in the heater to expand without supplying hot water or hot steam to any of the preparation devices, and to ensure safety usage by preventing personal injury resulting from contact with hot medium. Due to the condition to which said multi-way valve usually exposed, namely high temperature, usually temperature well above 100oC and high pressure, the valve is subjected to considerable wear. At these high temperatures there is the tendency of lime to be precipitated from the water, as a result of which the operation of the valve will be impaired after some time. To overcame these circumstances and to provide durable and resistant to these conditions valves, usually said multi-way valves are a ceramic valves comprising ceramic discs mounted in sealing engagement with and rotatable relative to one another and formed with respective distributor passages. Ceramic discs are relatively resistant to the prevailing extreme temperatures and pressure. The ceramic material does not tend, moreover, to the formation of lime deposits thereon, so that the original cross-sectional area of the distributor passages does not alter over an extended period of use, resulting in a uniformly satisfactory operation of the apparatus over a long time. In order to be able to automatic change positions of the multiway valve, said valve can be controlled by an electric motor.

The document DE102006049894(B3) discloses hot drinks machine with a brewing chamber, a hot water outlet, a drain and an electrically operable ceramic disc valve comprising a front disc, which is held to be rotationally fast in a first holding device with at least two inflow ducts for hot water and hot steam, with at least two inflow bores, a rotatable control disc with throughflow bores, and a back disc, which is held to be rotationally fast in a second holding device with at least two outflow ducts for hot water and hot steam, with at least two outflow bores, and at least one state of being switched to be free an inflow bore, a throughflow bore and an outflow bore are coincident. The distributing recess, used in known valves is namely utilized for dividing the hot water or hot steam stream under pressure which flows from an inlet channel, and for supplying at the same time two or more bores of the fixed distributor disc with said stream. Because said distributing recess (channel) is arranged on the bottom surface of the disc carrier and/or on the cooperating surface of the fixed distributor disc, water or steam under pressure flows between the bottom of the disc carrier and the fixed distributor disc, therefore there is induced a hydraulic force repelling both parts from each other what results in the possibility of leakage.

The document DE102008041122(A1) discloses the valve having a valve housing provided with an adjustable control disc, and a set of fixed valve discs, where the fixed valve discs exhibit a set of input channels and/or output channels. Inlet sections are provided upstream to the control disc and outlet sections are provided downstream to the control disc. A set of distribution recesses is arranged in the inlet sections and/or in the outlet sections, where the distribution recesses connect the input channels and/or the output channels with each other. The distribution recess can be arranged in a fixed valve member and there at a contact and / or interface between different valve parts, such as the housing on the one hand and a fixed valve disc on the other. As a valve part, in particular the housing, ceramic discs and possibly to understand seals between housing and ceramic discs. As a rule, it therefore extends at right angles to the relevant inlet channel and forms the distribution recess in shape of a fork arranged on the contact surface between two different parts of the valve as the housing and fixed valve disc.

The document DE102014205269 (A1) discloses a ceramic disc valve for hot beverage preparation devices for household purposes, in particular for fully automatic coffee machines, with a pressure feed line, with at least one pressure discharge and with a housing as a holding device for therein arranged, close to each other and mutually adjustable ceramic valve discs namely at least one fixed distributor disc and at least one adjustable control disc, and each having a seal for sealing the valve discs is further developed by spring elements for applying a contact pressure between the housing and the valve discs. Said spring elements are used for applying a defined contact pressure between the housing and the valve discs. The seals are thus relieved of this task and can therefore be sized and designed in terms of material and construction solely on their sealing purpose. The invention thus turns away from giving the seals a dual function, namely that of the sealing on the one hand and that of applying a contact pressure on the other. Rather, it pursues the principle of a separation of duties, according to which the additional spring elements are designed exclusively for a precisely defined contact pressure, whereas the seals serve exclusively to seal the valve discs relative to the housing. As a result, a reliable sealing, on the one hand, and a substantially constant contact pressure, on the other hand, can be achieved, above all over the life of ceramic disc valve. In particular, age-related plastic deformations of rubber seals can be compensated by the spring elements, so that the contact pressure between the valve discs remains almost constant. Because the spring elements can be selected in terms of material and dimensions so that they have the most flat spring characteristic, at least a flatter than that of rubber. Thus, they provide a largely constant contact pressure even in the event of aging-related slackening of the seals. Thus, ceramic disc valve can achieve a quasi-constant pressure resistance throughout its life. Conversely, the contact pressure between the valve discs in the new state of the disc valve need not be set as a precaution higher.

The distributing recess, used in known valves is namely utilized for dividing the hot water or hot steam stream under pressure which flows from an inlet channel, and for supplying at the same time two or more bores of the fixed distributor disc with said stream. Because said distributing recess (channel) is arranged on the bottom surface of the disc carrier and/or on the cooperating surface of the fixed distributor disc, water or steam under pressure flows between the bottom of the disc carrier and the fixed distributor disc, therefore there is induced a hydraulic force repelling both parts from each other what results in the possibility of leakage. To ensure a operation over lifetime without leakage - ceramic discs, gaskets and housing must be pre-stressed together. On the one hand the higher pre-stress force between ceramic discs, gaskets and housing results that leakage is less likely, but unfortunately it produces more friction between ceramic discs therefore greater force is needed to rotate the control disc what for instance reduces durability of the drive motor.

The objective of the present invention is to improve a ceramic disc valve and solve mentioned above problem so as to ensure better protection from leaking and reliable operation of the ceramic disc valve over an extended period of time.

In accordance with the present invention, there is provided a ceramic disc valve for a hot beverage preparing apparatus, in particular for distributing hot water and/or hot steam in a fully automatic coffee machines, comprising the features of claim 1.

In a preferred embodiment ceramic disc valve has the bottom surface of the disc carrier comprises openings which, together with inlet bores of the fixed distributor disc extend inlet channels towards the adjustable control disc. The inlet channel is ended by the opening disposed on the bottom surface and with a corresponding the inlet bore of the fixed distributor disc leads water or steam to the control disc where the water or steam flow can be closed by the control disc, therefore it cannot flow to the corresponding outlet port.

In an another preferred embodiment ceramic disc valve has the separator which divides the inlet line into a plurality of inlet channels which are symmetrically disposed around the axis and having substantially the same length, and form an acute angle with the axis, therefore the hydraulic pressure is evenly distributed.

Advantageously, ceramic disc valve can be disposed with openings arranged on the bottom surface having substantially round and they are symmetrically disposed around the axis, and having substantially the same diameter as inlet bores of the fixed distributor disc. The positive effect of such solution is that openings and the inlet bores creates smooth transition between the inlet channel and the inlet bore.

In an another preferred embodiment ceramic disc valve in which inlet channels are substantially cylindrical for substantially their entire length, therefore the hydraulic pressure is evenly distributed in the inlet channel.

According to a further advantageous embodiment of the invention, ceramic disc valve has the inlet channels where each inlet channel is communicated with only one corresponding inlet bore of the fixed distributor disc.

In an another preferred embodiment ceramic disc valve is provided with sealing means that forms sealed flow passageways for hot water and/or hot steam from inlet channels to the corresponding bore of a fixed distributor disc. The leak-tightness of the connection between inlet channel and the inlet bores is ensured. The sealing means is provided with bores allowing hot water and/or hot steam flow from inlet channel to corresponding inlet bore arranged in the fixed distribution disc.

The insert can be produced by an injection molding process what has a positive influence on production costs. Since the insert is separate from the housing, it is possible to use many types of the inserts comprising different version of the inlet line, the inlet port, etc. It gives possibility of easy adaptation the valve to a new products requirements. By using springs which press the insert with the disc carrier in the direction of the disc carrier disposed in lower housing, it is achieved approximately constant pre-stress force between ceramic discs, gaskets and disc carriers, above all over the life of the ceramic disc valve. In particular, age-related plastic deformations of rubber seals can be compensated by the spring elements, so that the contact pressure between the valve discs remains almost constant. Thus, the ceramic disc valve can achieve a quasi-constant pressure resistance throughout its life.

Further benefits and advantages of the present invention will become apparent after a careful reading of the detailed description with appropriate reference to the accompanying drawings.

In the drawings:
- Fig, 1: is a exploded view of ceramic disc valve,
- Fig. 2: is a perspective view of ceramic disc valve with the insert,
- Fig. 3: is a bottom view of ceramic disc valve,
- Fig. 4: is an A-A cross-section view of ceramic disc valve,
- Fig. 5: is a bottom side view of the insert.

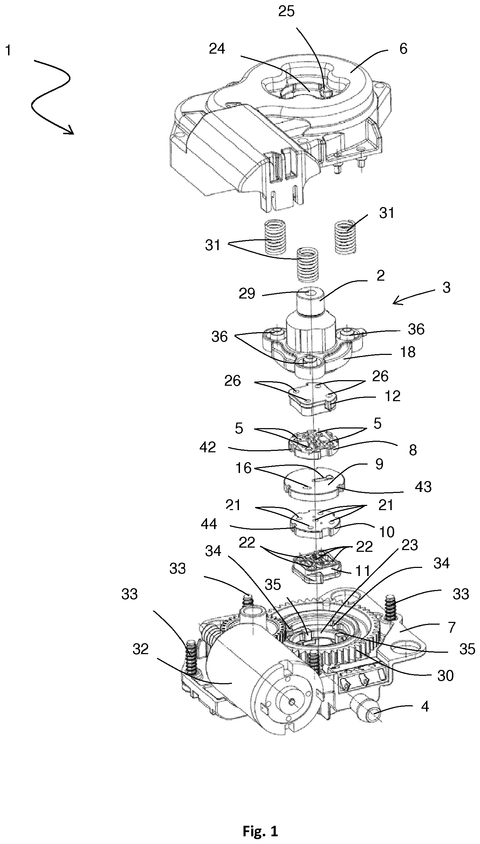

Referring to the drawings to Figs.1, ceramic disc valve 1 for a hot beverage preparing apparatus, in particular for distributing hot water and/or hot steam in a fully automatic coffee machines, in accordance with the preferred embodiment of the present invention comprises an upper housing 6 and cooperating lower housing 7. The upper portion of housing 6 has a housing opening 24 having a fixing element 25. The housing opening 24 receives an insert 3, and the fixing element 25 fixes the insert 3 to prevent from its rotation in relation to the upper housing 6. The insert 3 is resiliently fastened to the upper housing 6 by three helical springs 31 inserted to spring guides 36 disposed symmetrically at 120 degrees on its lateral lower portion. The insert 3 comprises an inlet line 29 with an inlet port 2 and the separator 13 (not shown on this figure) dividing the inlet line 29 to four inlet channels 14, 15, 38, 39 (not shown on this figure) which are symmetrically disposed around an axis 37 and having substantially the same length, and form an acute angle with the axis 37. Inlet channels 14, 15, 38, 39(not shown on this figure) create four substantially round openings 19, 20, 40, 41 on a bottom surface 17 (not shown on this figure) created on the lower portion of the insert 3. Between the insert 3 and the lower housing 7, a package made of ceramic valve disks 8, 9, 10, which are arranged in sealing engagement, for example made of aluminum oxide or silicon carbide, is held in an inner space 27 (partially shown on this figure). The inner space 27 is created by a flange shape disc carrier 18 disposed on the bottom portion of the insert 3 and closed from one side by the bottom surface 17 (not shown on this figure) which form cup shaped space, and a disc carrier 23 with closing it a bottom surface disposed on the lower housing 7 and create another a cup shape space. The package consists of an upper distributor disc 8, which is arranged in the disc carrier 18 with a sealing means 12, a control disc 9 arranged there between and a lower distributor disc 10 arranged underneath, in the disc carrier 23 with a sealing means 11. The distributor discs 8, 10 and the control disc 9 are arranged coaxially with respect to the axis 37, and are penetrated by bores for hot water, air and hot steam. The distributor disks 8, 10 are held in a rotationally fixed manner over the insert 3 or in the lower housing 7 by using notches 42 cooperating with protrusions 45 (not shown on this figure) and respectively notches 44 cooperating with protrusions 35. The interposed control disk 9 has at its periphery three notches 43 which cooperate with protrusion 34 disposed at a drive wheel 30. If necessary, the drive wheel 30 turns the control disk 9 with respect to the distributor disks 8, 10 by an electric motor 32. The sealing means 12 has four inlet bores 26, and distributor disc 8 has four inlet bores 5. Each of inlet bores 5 with appropriate inlet bores 26 separately extend each of the inlet channels 14, 15, 38, 39, therefore to the control disc 9 four separate streams of hot water or hot steam are supplied. By using springs 31 which press the insert 3 with the disc carrier 18 in the direction of the disc 23 carrier disposed in lower housing 7, it is achieved approximately constant pre-stress force between ceramic discs 8, 9, 10, sealing means 12, 11 and disc carriers 18, 23, above all over the life of the ceramic disc valve. The bottom of the disc carrier 23 has openings (not shown on this figure) which communicate outlet ports 4 to outlet bores 21 of the distributor disc 10. Outlet bores 22 disposed at sealing means 11 allow to flow hot water or hot steam from outlet bores 21 of the distributor disc 10 to outlet ports 4. The upper housing 6 and the lower housing 7 are held together by four screws 33.

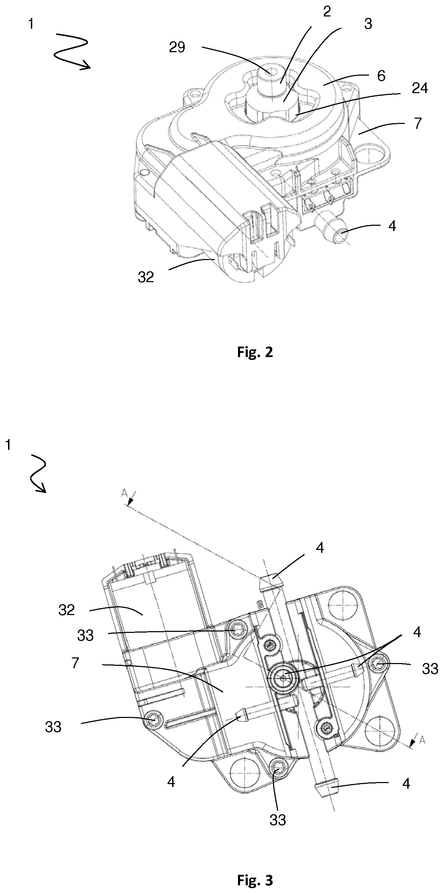

Fig. 2 shows a completely assembled ceramic disc valve 1 in a perspective view. The upper housing 6 is connected to the lower housing 7 and is provided with the insert 3 placed in the housing opening 24 having the inlet line 29, the inlet port 2. Hot water or hot steam or air flowing between the inlet port 2 and outlet ports 4 (on this figure is shown one outlet port 4) is controlled by the control disc 9 (not shown on this figure). This is possible because the control disc is adjustable disposed between distributor discs 8, 10 (not shown on this figure) which are fixed accordingly in the disc carrier 18 (not shown on this figure) and disc carrier 23 (not shown on this figure). The electric motor 32 is held between the upper housing 6 and the lower housing 7.

Fig. 3 shows ceramic disc valve 1 from a bottom side. The upper housing 6 (not shown on this figure) is connected to the lower housing 7 comprises four outlet ports 4. The flow of hot water or hot steam or air is controlled by the control disc 9 (not shown on this figure). This is possible because the control disc is adjustable disposed between distributor discs 8, 10 (not shown on this figure) which are fixed accordingly in the disc carrier 18 (not shown on this figure) and disc carrier 23 (not shown on this figure). The electric motor 32 is held between the upper housing 6 and the lower housing 7. Outlet bores 21 of the distributor disc 10 and control bores and recess 16 of the control disc 16 can be suitable disposed to achieve stream flow to appropriate outlet ports 4 to align production requirements.

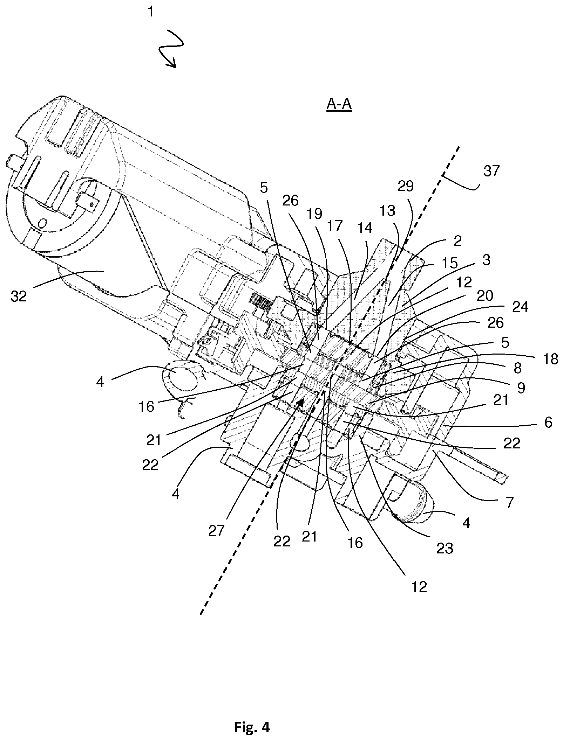

Fig. 4 shows a cross section A-A of ceramic disc valve ceramic disc valve 1 for a hot beverage preparing apparatus, in particular for distributing hot water and/or hot steam in a fully automatic coffee machines, in accordance with the preferred embodiment of the present invention comprises an upper housing 6 and cooperating lower housing 7. The housing opening 24 receives an insert 3. The insert 3 is resiliently fastened to the upper housing 6 by three helical springs 31 (not shown on this figure) The insert 3 comprises an inlet line 29 with an inlet port 2 and the separator 13 dividing the inlet line 29 to four inlet channels 14, 15, 38, 39 (inlet channels 38, 39 are not shown on this figure) which are symmetrically disposed around an axis 37 and having substantially the same length, and form an acute angle with the axis 37. Inlet channels 14, 15, 38, 39 create four substantially round openings 19, 20, 40, 41 (opening 40, 41 are not shown on this figure) on a bottom surface 17 created on the lower portion of the insert 3. Between the insert 3 and a lower housing 7, a package made of ceramic valve disks 8, 9, 10, which are arranged in sealing engagement, for example made of aluminum oxide or silicon carbide, is held in an cylindrical inner space 27. The inner space 27 is created by a flange shape disc carrier 18 disposed on the bottom portion of the insert 3 and closed from one side by the bottom surface 17 which form cup shaped space, and a disc carrier 23 with closing it a bottom surface disposed on the lower housing 7 creating another a cup shape space. The package consists of an upper distributor disc 8, which is arranged in the disc carrier 18 with a sealing means 12, a control disc 9 arranged there between and a lower distributor disc 10 arranged underneath, in the disc carrier 23 with a sealing means 11. The distributor discs 8, 10 and the control disc 9 are arranged coaxially with respect to the axis 37, and are penetrated by bores for hot water, air and hot steam. The distributor disks 8, 10 are held in a rotationally fixed manner over the insert 3 or in the lower housing 7. If necessary, the drive wheel 30 turns the control disk 9 with respect to the distributor disks 8, 10 by an electric motor 32. The sealing means 12 has four inlet bores 26, and distributor disc 8 has four inlet bores 5 (two inlet bore 5 are not on this figure). Each of inlet bores 5 with appropriate inlet bores 26 separately extend each of the inlet channels 14, 15, 38, 39, therefore to the control disc 9 four separate streams of hot water or hot steam are supplied. By using springs 31 (not shown on this figure) which press the insert 3 with the disc carrier 18 in the direction of the disc 23 carrier disposed in lower housing 7, it is achieved approximately constant pre-stress force between ceramic discs 8, 9, 10, sealing means 12, 11 and disc carriers 18, 23, above all over the life of the ceramic disc valve. The bottom of the disc carrier 23 has openings which communicate outlet ports 4 to outlet bores 21 of the distributor disc 10. Outlet bores 22 disposed at sealing means 11 allow to flow hot water or hot steam from outlet bores 21 of the distributor disc 10 to outlet ports 4. The upper housing 6 and the lower housing 7 are held together by four screws 33. The stream of hot water or hot steam or art is supplied to the inlet port 2 is divided is divided to four sub-streams by the separator 13. Sub-streams flow into inlet channels 14, 15, 38, 39 which are separately connected to appropriate inlet 5 of the distributor disc 8 though the inlet bores 29 of the sealing means 12. These create four bores that extend the inlet channels 14, 15, 38, 39 in the control disk 9. The control disk 9 has a control bores and recess 16 which are used to open and/or close suitable bores of the distributor discs 8, 10 to control stream flow through the package of ceramic disc 8, 9, 10 to appropriate outlet ports 4.

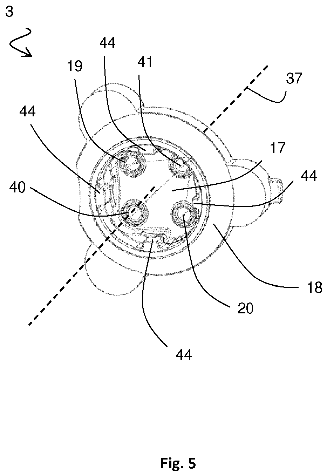

Fig. 5 shows the insert 3 from a bottom view. The insert 3 comprises the separator 13 (not shown on this figure) which divides the inlet line 29 to four inlet channels 14, 15, 38, 39, and substantially round openings 19, 20, 40, 41 disposed on the bottom surface 17 as ends of inlet channels 14, 15, 38, 39. The bottom surface which with the flange shape disc carrier 18 creates cup-shaped space for receiving the sealing means 12 (not show on this figure) and the distributor disc 8 (not show on this figure) having four notches 42 (not show on this figure) cooperating with four protrusions 44 to fix it in the insert 3.

### List of reference signs.

- 1: ceramic disc valve
- 2: inlet port
- 3: insert
- 4: outlet port
- 5: inlet bore
- 6, 7: housing
- 6: upper housing
- 7: lower housing
- 8, 9, 10: Valve discs
- 9: control disc
- 8, 10: distributor discs
- 11, 12: sealing means
- 13: separator
- 14, 15, 38, 39: Inlet channels
- 16: control bores and recess
- 17: bottom surface
- 18, 23: discs carrier
- 19, 20, 40, 41: openings
- 21: outlet bore
- 22: outlet bore
- 24: housing opening
- 25: fixing element
- 26: inlet bores
- 27: inner space
- 29: inlet line
- 30: drive wheel
- 31: spring
- 32: electric motor
- 33: screw
- 34, 35, 45: protrusions
- 36: spring guide
- 37: axis
- 42, 43, 44: notches

## Claims

1. Ceramic disc valve (1) for a hot beverage preparing apparatus, in particular for distributing hot water and/or hot steam in a fully automatic coffee machines, comprising an inlet line (29) with an inlet port (2), and at least one outlet port (4, 5) and a housing (6, 7) having a disc carrier (18, 23) with a bottom surface (17) and with openings (19, 20), creating an inner space (27) for receiving and retaining ceramic valve discs (8, 9, 10) which are arranged in sealing engagement with each other, and can be adjusted with respect to one another, namely at least one fixed distributor disc (8, 10) and at least one adjustable control disc (9), with respect to the housing (6, 7), and a sealing means (11, 12) disposed between the fixed distributor disc (8, 10) and the disc carrier (18, 23), and with a separator (13) for dividing the inlet line (29) into a plurality of inlet channels (14, 15) and therefore, for dividing and distributing hot water and/or hot steam stream into sub-streams for supplying the inner space (27) of the housing (6, 7), wherein the separator (13) is arranged outside of the inner space (27), **characterized in that** the upper portion of the housing (6) has an opening (24) with a fixing element (25) for receiving and blocking against rotation an insert (3) which is resiliently in axial direction fastened to the upper housing (6) by springs (31) wherein the inlet port (2), the separator (13), inlet channels (14, 15) and the disc carrier (18) with the bottom surface (17) having openings (19, 20) is arranged in the insert (3).

2. Ceramic disc valve (1) according to claim 1 **characterized in that** the bottom surface (17) of the disc carrier (18) comprises openings (19, 20) which, together with inlet bores (5) of the fixed distributor disc (8) extend inlet channels (14, 15) towards the adjustable control disc (9).

3. Ceramic disc valve (1) according claim 1 or 2 **characterized in that** the separator (13) divides the inlet line (29) into a plurality of inlet channels (14, 15) which are symmetrically disposed around the axis (37) and having substantially the same length, and form an acute angle with the axis (37).

4. Ceramic disc valve (1) according to any of the preceding claim **characterized in that** openings (19, 20) are substantially round and symmetrically disposed around the axis (37) having substantially the same diameter as inlet bores (5) of the fixed distributor disc (8).

5. Ceramic disc valve (1) according to any of the preceding claim **characterized in that** inlet channels (14, 15) are substantially cylindrical for substantially their entire length.

6. Ceramic disc valve (1) according to any of the preceding claim **characterized in that** each of the inlet channel (14, 15) is communicated with only one corresponding inlet bore (5) of the fixed distributor disc (8).

7. Ceramic disc valve (1) according to any of the preceding claim **characterized by** the sealing mean (12), that forms sealed flow passageways for hot water and/or hot steam from inlet channels (14, 15) to the corresponding bore (5) of a fixed distributor disc (8).

## Patentansprüche

1. Keramisches Scheibenventil (1) für eine Heißgetränkezubereitungsvorrichtung, insbesondere zum Verteilen von heißem Wasser und/oder heißem Dampf in einem Kaffeevollautomaten, mit einer Zuleitung (29) mit einem Zulaufanschluss (2) und mindestens einem Ablaufanschluss (4, 5) und einem Gehäuse (6, 7) mit einem Scheibenträger (18, 23) mit einer unteren Fläche (17) und Öffnungen (19, 20), die einen Innenraum (27) zum Aufnehmen und Halten von keramischen Ventilscheiben (8, 9, 10) bilden, welche dicht ineinander eingreifend angeordnet sind und sich in Bezug aufeinander justieren lassen, und zwar mindestens einer feststehenden Verteilerscheibe (8, 10) und mindestens einer in Bezug auf das Gehäuse (6, 7) verstellbaren Steuerscheibe (9), und einem Dichtungsmittel (11, 12), das zwischen der feststehenden Verteilerscheibe (8, 10) und dem Scheibenträger (18, 23) angeordnet ist, und mit einem Abscheider (13) zum Aufteilen der Zuleitung (29) in mehrere Zulaufkanäle (14, 15) und somit zum Aufteilen und Verteilen eines Heißwasser- und/oder Heißdampfstroms in/auf Teilströme zum Zuführen in den Innenraum (27) des Gehäuses (6, 7), wobei der Abscheider (13) außerhalb des Innenraums (27) angeordnet ist, **dadurch gekennzeichnet, dass** der obere Abschnitt des Gehäuses (6) eine Öffnung (24) mit einem Fixierelement (25) zum Aufnehmen und Blockieren einer Drehbewegung eines Einsatzes (3) aufweist, der über Federn (31) in axialer Richtung federnd an dem oberen Gehäuse (6) befestigt ist, wobei der Zulaufanschluss (2), der Abscheider (13), die Zulaufkanäle (14, 15) und der Scheibenträger (18) mit der unteren Fläche (17) und den Öffnungen (19, 20) in dem Einsatz (3) angeordnet sind.

2. Keramisches Scheibenventil (1) nach Anspruch 1, **dadurch gekennzeichnet, dass** die untere Fläche (17) des Scheibenträgers (18) Öffnungen (19, 20) umfasst, die zusammen mit Zulaufbohrungen (5) der feststehenden Verteilerscheibe (8) Zulaufkanäle (14, 15) zur verstellbaren Steuerscheibe (9) hin verlängern.

3. Keramisches Scheibenventil (1) nach Anspruch 1 oder 2, **dadurch gekennzeichnet, dass** der Abscheider (13) die Zuleitung (29) in mehrere Zulaufkanäle (14, 15) aufteilt, die symmetrisch um die Achse (37) herum angeordnet sind und im Wesentlichen die gleiche Länge aufweisen und mit der Achse (37) einen spitzen Winkel bilden.

4. Keramisches Scheibenventil (1) nach einem der vorhergehenden Ansprüche, **dadurch gekennzeichnet, dass** die Öffnungen (19, 20) im Wesentlichen rund und symmetrisch um die Achse (37) herum angeordnet sind und im Wesentlichen den gleichen Durchmesser aufweisen wie die Zulaufbohrungen (5) der feststehenden Verteilerscheibe (8).

5. Keramisches Scheibenventil (1) nach einem der vorhergehenden Ansprüche, **dadurch gekennzeichnet, dass** die Zulaufkanäle (14, 15) im Wesentlichen über ihre gesamte Länge hinweg im Wesentlichen zylinderförmig sind.

6. Keramisches Scheibenventil (1) nach einem der vorhergehenden Ansprüche, **dadurch gekennzeichnet, dass** jeder der Zulaufkanäle (14, 15) mit nur einer entsprechenden Zulaufbohrung (5) der feststehenden Verteilerscheibe (8) verbunden ist.

7. Keramisches Scheibenventil (1) nach einem der vorhergehenden Ansprüche, **gekennzeichnet durch** das Dichtungsmittel (12), das abgedichtete Strömungswege für heißes Wasser und/oder heißen Dampf aus Zulaufkanälen (14, 15) zu der entsprechenden Bohrung (5) einer feststehenden Verteilerscheibe (8) bildet.

## Revendications

1. Soupape à disque céramique (1) pour un appareil de préparation de boissons chaudes, en particulier pour l'émission d'eau chaude et/ou de vapeur chaude dans une machine à café intégralement automatique, comprenant une conduite d'entrée (29) avec un orifice d'entrée (2), et au moins un orifice de sortie (4, 5) et un logement (6, 7) ayant un support de disque (18, 23) avec une surface inférieure (17) et avec des ouvertures (19, 20), créant un espace intérieur (27) pour la réception et la retenue de disques à soupape céramique (8, 9, 10) disposés en engagement étanche l'un avec l'autre, et pouvant être réglés l'un par rapport à l'autre, notamment un disque de distribution fixe (8, 10) et au moins un disque de contrôle réglable (9), par rapport au logement (6, 7), et un moyen d'étanchéité (11, 12) disposé entre le disque de distribution fixe (8, 10) et le support de disque (18, 23), et avec un séparateur (13) pour répartir la conduite d'entrée (29) en une pluralité de conduits d'entrée (14, 15) et, dès lors, pour répartir et distribuer le flux d'eau chaude et/ou de vapeur chaude en des sous-flux pour alimenter l'espace intérieur (27) du logement (6, 7), dans lequel le séparateur (13) est disposé en dehors de l'espace intérieur (27), **caractérisée en ce que** la partie supérieure du logement (6) possède une ouverture (24) avec un élément de fixation (25) pour la réception et le blocage en rotation d'un insert (3) fixé de façon résiliente en direction axiale au logement supérieur (6) par des ressorts (31), dans lequel l'orifice d'entrée (2), le séparateur (13), les conduits d'entrée (14, 15) et le support de disque (18) avec la surface inférieure (17) présentant des ouvertures (19, 20) sont disposés dans l'insert (3).

2. Soupape à disque céramique (1) selon la revendication 1, **caractérisée en ce que** la surface inférieure (17) du support de disque (18) comprend des ouvertures (19, 20) qui, avec les alésages d'entrée (5) du disque de distribution fixe (8) étendent les conduits d'entrée (14, 15) en direction du disque de contrôle réglable (9).

3. Soupape à disque céramique (1) selon la revendication 1 ou 2, **caractérisée en ce que** le séparateur (13) répartit la conduite d'entrée (29) en une pluralité de conduits d'entrée (14, 15) disposés de façon symétrique autour de l'axe (37), ayant substantiellement la même longueur et formant un angle aigu avec l'axe (37).

4. Soupape à disque céramique (1) selon l'une quelconque des revendications précédentes, **caractérisée en ce que** les ouvertures (19, 20) sont substantiellement rondes et disposées de façon symétrique autour de l'axe (37) ayant substantiellement le même diamètre que les alésages d'entrée (5) du disque de distribution fixe (8).

5. Soupape à disque céramique (1) selon l'une quelconque des revendications précédentes, **caractérisée en ce que** les conduits d'entrée (14, 15) sont substantiellement cylindriques substantiellement sur l'intégralité de leur longueur.

6. Soupape à disque céramique (1) selon l'une quelconque des revendications précédentes, **caractérisée en ce que** chacun des conduits d'entrée (14, 15) communique avec un seul alésage d'entrée correspondant (5) du disque de distribution fixe (8).

7. Soupape à disque céramique (1) selon l'une quelconque des revendications précédentes, **caractérisée par** le moyen d'étanchéité (12), qui forme des passages d'écoulement étanches pour l'eau chaude et/ou la vapeur chaude des conduits d'entrée (14, 15) vers l'alésage correspondant (5) d'un disque de distribution fixe (8).
